(19) Europäisches Patentamt
European Patent Office
Office européen des brevets

(11) **EP 0 940 689 B1**

(12) **FASCICULE DE BREVET EUROPEEN**

(45) Date de publication et mention de la délivrance du brevet:
**08.12.2004 Bulletin 2004/50**

(51) Int Cl.⁷: **G01S 7/35**, G01S 13/32

(21) Numéro de dépôt: **99400469.5**

(22) Date de dépôt: **26.02.1999**

(54) **Récepteur d'un radar à onde continue et à saut de fréquence**

Dauerstrichradar-Empfänger mit Frequenzsprung

Continuous wave radar receiver with frequency hopping

(84) Etats contractants désignés:
**BE DE ES FR GB IT SE**

(30) Priorité: **03.03.1998 FR 9802540**

(43) Date de publication de la demande:
**08.09.1999 Bulletin 1999/36**

(73) Titulaire: **Thales**
**92200 Neuilly Sur Seine (FR)**

(72) Inventeurs:
• **Laviec, Philippe**
**94117 Arcueil Cedex (FR)**
• **Cornic, Pascal**
**94117 Arcueil Cedex (FR)**

(56) Documents cités:
**GB-A- 2 249 448    US-A- 5 646 623**

**Description**

La présente invention concerne un récepteur d'un radar à onde continue et à saut de fréquence. Elle s'applique notamment à des radars équipant des automobiles et plus généralement pour des radars nécessitant un faible coût de réalisation.

Un radar à onde continue et à saut de fréquence peut émettre selon plusieurs fréquences, par exemple sur quatre, voire plus. Un tel radar peut par exemple équiper une automobile pour une fonction du type ACC selon l'expression anglo-saxonne « Automotive Cruise Control ». Un radar de ce type est destiné à permettre la régulation de l'allure des véhicules automobiles. Il détecte et localise le plus proche véhicule situé dans la voie du véhicule porteur. Les informations, notamment de distances, sont transmises par exemple à un calculateur qui agit, via des interfaces appropriées, sur le contrôle du moteur de façon à réguler la distance séparant le véhicule de son prédécesseur.

Un radar destiné à équiper une automobile, qui est un produit de consommation de grande série, doit être de faible coût. Ce faible coût est atteint si tous les composants du radar sont obtenus économiquement. Il est en particulier nécessaire d'obtenir un récepteur à faible prix. Cet objectif peut être atteint notamment par l'utilisation d'un récepteur numérique comportant peu de composants. Pour cela, il est judicieux de n'utiliser qu'un seul codeur pour convertir numériquement les signaux de réception. Dans un récepteur à saut de fréquence, la distance D du radar à une cible peut être donnée par la relation suivante :

$$\Delta\varphi = \frac{4\pi D}{c} \times \Delta F$$

où c est la vitesse de la lumière et $\Delta F$ et $\Delta\varphi$ respectivement la différence de fréquence et la différence de phase entre deux signaux successifs.

L'utilisation d'un seul codeur pour toutes les voies de réception, une voie de réception étant associée à une fréquence, implique que les échantillonnages des signaux de voies de réceptions différentes ne peuvent plus être synchrones mais au contraire séquentiels. Or, l'absence de synchronisme entre ces signaux entraîne l'existence d'un déphasage supplémentaire dû à l'effet Doppler qui perturbe la mesure de distance. En fait, cet effet peut être corrigé après les transformées rapides de Fourrier, dites FFT, des signaux de réception, cependant, toujours pour des raisons de facilité de mise en oeuvre et donc aussi de coût, il est préférable d'effectuer la correction avant le traitement par FFT. En effet, cela évite de faire par la suite une correction différentiée relative à chaque filtre Doppler.

Un but de l'invention est notamment de permettre cette correction amont et donc de permettre la réalisation d'un récepteur pour radar à onde continue et à saut de fréquence économique pour la détection de distances entre objets mobiles et pouvant travailler avec un seul codeur, et cela en jouant sur l'extrapolation des signaux échantillonnés. A cet effet, l'invention a pour objet un récepteur pour radar à onde continue et à saut de fréquence émettant selon plusieurs fréquences et comprenant plusieurs voies de réception correspondantes, caractérisé en ce qu'il comporte au moins des moyens d'échantillonnage réalisant des échantillons réels des signaux dans chaque canal de réception et des moyens d'extrapolation, les moyens d'extrapolation produisant des échantillons fictifs synchrones des échantillons réels, les signaux de réception étant constitués à partir des échantillons réels et des échantillons fictifs.

L'invention a pour principaux avantages qu'elle améliore le filtrage des signaux de réception, qu'elle s'adapte à un nombre quelconque de fréquences d'émission, qu'elle permet de rendre indépendants le rythme de sortie des informations et la fréquence d'échantillonnage, qu'elle limite la dynamique du codeur, qu'elle facilite l'autocalibrage, qu'elle évite les dérives dans le temps et qu'elle est simple à mettre en oeuvre.

D'autres caractéristiques et avantages de l'invention apparaîtront à l'aide de la description qui suit faite en regard de dessins annexés qui représentent :

- la figure 1, un exemple de forme d'onde à l'émission pour un radar à onde continue et à saut de fréquence ;
- la figure 2, les instants d'échantillonnages des signaux de réception, symbolisés par des flèches, en fonction des pas de fréquences utilisées par le radar;
- la figure 3, des échantillonnages fictifs des signaux de réception, représentés par des flèches blanches, et calés sur les instants d'échantillonnages réels ;
- la figure 4, à titre d'exemple deux signaux relatifs respectivement à deux fréquences extrapolés conformément à des échantillonnages fictifs ;
- la figure 5, par un synoptique, un radar à onde continue et à saut de fréquence comportant un récepteur selon l'invention ;
- la figure 6, des moyens de mémorisation des échantillons réels, des moyens d'extrapolation et des moyens de filtrage ;
- la figure 7, une illustration de modes de réalisations possibles de composants d'un récepteur selon l'invention.

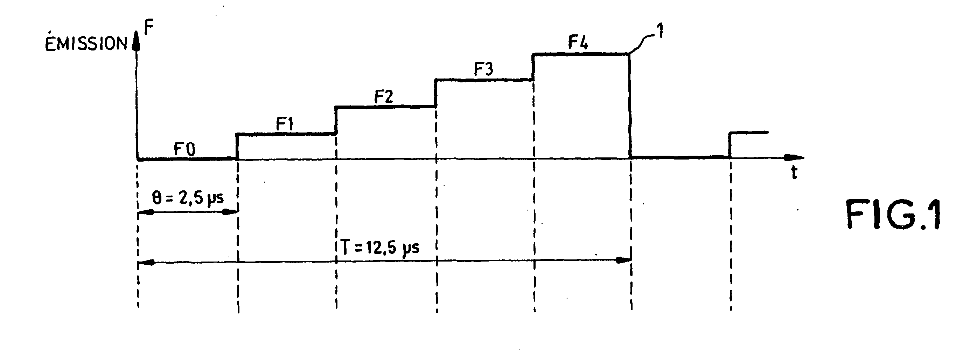

La figure 1 présente en fonction du temps un exemple de forme d'onde 1 à l'émission, pour un radar à onde continue et à saut de fréquence, dans un cas d'utilisation par exemple de cinq fréquences, F0, F1, F2, F3, F4. Le radar émet, pour chaque récurrence de traitement radar, successivement pendant des durées θ égales par exemple à 2,5 μs un signal à la première fréquence F0, puis un signal à la deuxième fréquence F1 et ainsi de suite jusqu'à la cinquième fréquence F4. Puis de nouveau pour la récurrence suivante, un signal est émis à la première fréquence F0. La durée T d'une trame d'émission est ainsi égale par exemple à 12,5 μs. A la réception, durant l'émission de chaque fréquence F0, F1, F2, F3, F4, le récepteur reste ouvert. Les signaux reçus sont échantillonnés après un filtrage adapté tel que décrit par la suite.

Les cinq fréquences F0, F1, F2, F3, F4 peuvent être notées selon les relations suivantes:

$$F0 = F + k_0 \nu \qquad (1)$$

$$F1 = F + k_1 \nu \qquad (2)$$

$$F2 = F + k_2 \nu \qquad (3)$$

$$F3 = F + k_3 \nu \qquad (4)$$

$$F4 = F + k_4 \nu \qquad (5)$$

où F est une fréquence quelconque dans la bande d'utilisation du radar, par exemple 76 à 77 GHz pour un radar automobile, les coefficients $k_i$ sont cinq entiers différents, et $\nu$ représente une fréquence donnée, par exemple égale ou de l'ordre de 250 kHz.

La détermination de la distance d'une cible et notamment sa levée d'ambiguïté se fait par traitement sur les signaux reçus aux cinq fréquences, par exemple sur la voie somme dans le cas d'utilisation d'une antenne monopulse. Elle nécessite notamment d'échantillonner puis de mémoriser les cinq signaux de réception d'une même récurrence. Dans une mise en oeuvre de récepteur analogique classique, il faut prévoir alors des circuits de blocage des signaux, des bloqueurs, et cinq codeurs analogique-numérique, dans un cas d'utilisation de cinq fréquences. Non seulement, une telle solution est coûteuse dans la mesure où elle nécessite beaucoup de composants, mais de plus elle est délicate à mettre au point puisqu'il faut notamment assurer un gain identique sur les cinq voies ainsi qu'une même évolution de phase et les mêmes caractéristiques de filtrage.

Une solution analogique s'avérant coûteuse et délicate à mettre en oeuvre, il peut alors être envisagé de prévoir une solution numérique. Un seul codeur analogique-numérique est alors suffisant et les signaux peuvent être mémorisés par les circuits numériques. Une telle solution numérique, si elle permet une économie de réalisation n'est cependant pas dénuée d'inconvénients. En particulier, que la solution soit numérique ou analogique, il est nécessaire d'échantillonner les signaux de façon synchrone, ce qui impose notamment que les échantillonnages des signaux de réception s'effectuent au même instant sur tous les canaux de fréquences F0, F1, F2, F3, F4. Or, par construction cette synchronisation ne peut avoir lieu dans un récepteur numérique économique qui n'utilise qu'un seul codeur, puisque les signaux émis et reçus dans ces canaux le sont de façon séquentielle. La nécessité de réaliser un échantillonnage synchrone est commandée par l'effet Doppler. En effet, la rotation de phase Δφ du signal reçu, d'une fréquence à la suivante est donnée par la relation suivante :

$$\Delta\varphi = \frac{4\pi D}{c} \times \Delta F \qquad (6)$$

D étant, aux ambiguïtés près, la distance du radar à la cible, qui est en fait la distance à détecter, c étant la vitesse de la lumière et ΔF la différence de fréquence entre deux signaux successifs, en se référant aux relations 1 à 5 précédentes, ΔF est par exemple égal à $k_0 \nu$, $k_1 \nu$, $k_2 \nu$, $k_3 \nu$ ou $k_4 \nu$. La rotation de phase Δφ est en fait le déphasage entre deux signaux successifs, sachant que deux signaux successifs échantillonnés sont respectivement aux fréquences Fi et Fi+1.

En l'absence de synchronisation, telle que décrite précédemment, la rotation de phase est donnée par la relation suivante où intervient la fréquence Doppler $F_d$ :

$$\Delta\varphi = \frac{4\pi D}{c} \times \Delta F + 2\pi F_d\, T_e \qquad\qquad (7)$$

$T_e$ étant la période d'échantillonnage, $T_e$ est par exemple sensiblement égale à la durée d'émission T précitée.

Il apparaît donc que la distance D ne peut plus être déterminée simplement à cause d'un paramètre non maîtrisé qui est la fréquence Doppler $F_d$. La rotation de phase $\Delta\varphi$ est obtenue en pratique par l'intermédiaire de modules FFT qui réalisent des transformations de Fourrier rapides. La relation (7) précédente montre donc qu'il existe alors une corrélation entre ces modules, plus précisément leurs résultats, et la fréquence Doppler des signaux reçus, ce qui perturbe les mesures de distances.

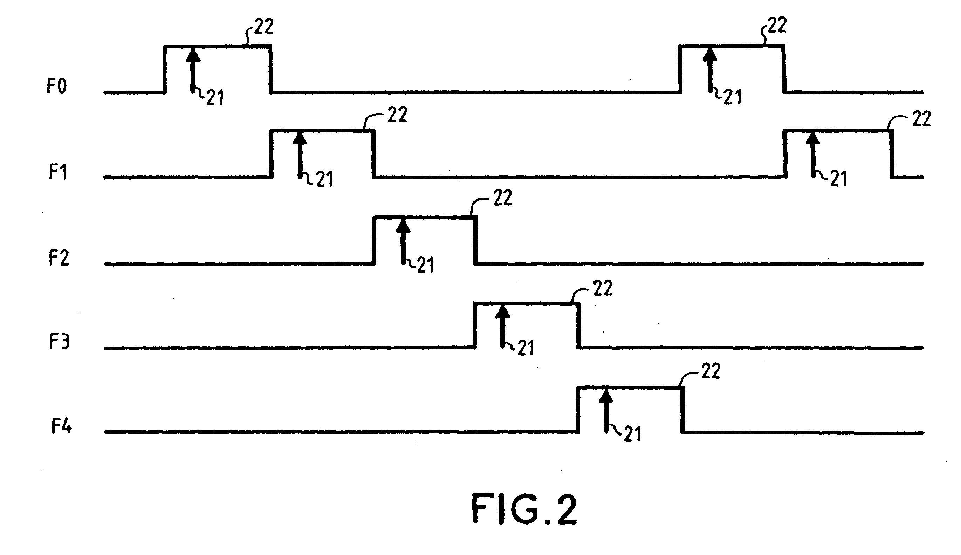

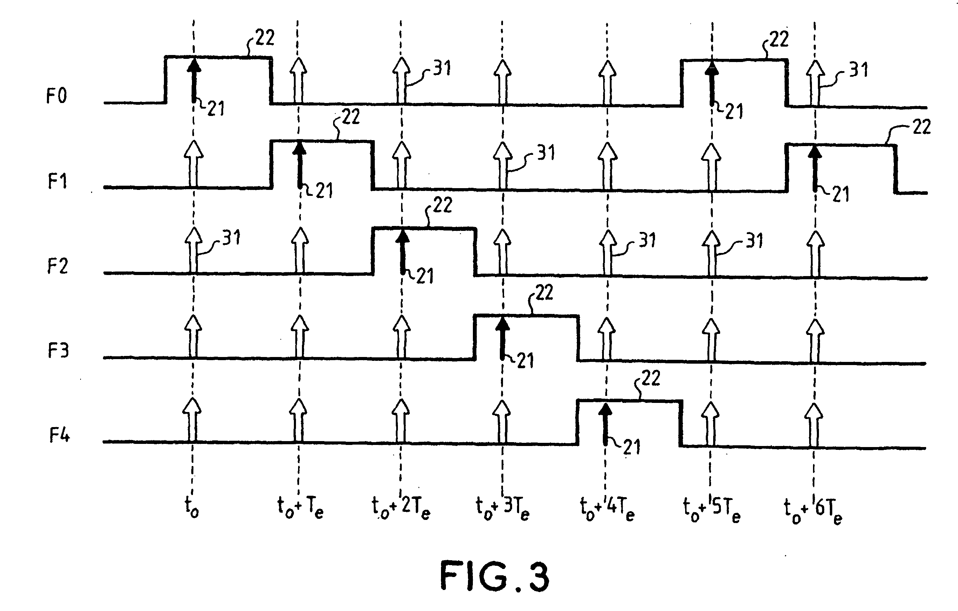

Les figures 2 et 3 illustrent le principe de fonctionnement d'un récepteur numérique selon l'invention qui permet notamment de s'affranchir des problèmes de synchronisation précédemment évoqués, dans le cas par exemple d'un radar utilisant cinq fréquences. La figure 2 présente les instants d'échantillonnages, symbolisés par des flèches 21 relativement au pas 22 pour chacune des fréquences F0, F1, F2, F3, F4. Pour une récurrence donnée, les valeurs des échantillons des signaux reçus, chacun relativement à un pas de fréquence 22, sont notés respectivement $A_0$, $A_1$, $A_2$, $A_3$, $A_4$ relativement aux fréquences F0, F1, F2, F3, F4. Sur la figure 3, apparaissent, en plus des échantillonnages précédemment décrits 22, des échantillonnages fictifs représentés par des flèches blanches 31 et calés sur les échantillonnages réels 22. Pour chacune des fréquences, ces échantillonnages fictifs 31 sont réalisés en l'absence de tout signal reçu correspondant à la fréquence considérée. Ces échantillonnages sont fictifs car ils ne sont pas réalisés sur des signaux, mais correspondent à des valeurs fictives mémorisées par les circuits du récepteur numérique, plus particulièrement par des moyens de mémorisation. Ces valeurs sont quelconques et peuvent éventuellement être nulles où constantes, de manière par exemple à simuler un blocage des valeurs réelles échantillonnées, en étant égales à la dernière valeur réelle échantillonnée. Ces échantillons fictifs peuvent encore être déterminés par le calcul, par exemple par une interpolation linéaire du premier ou du deuxième ordre, avec ou sans bruit. Le tableau suivant illustre cet échantillonnage effectué par un récepteur selon l'invention :

| F0 | $A_0$ | $a_{01}$ | $a_{02}$ | $a_{03}$ | $a_{04}$ | $A'_0$ | $a'_{01}$ |
|----|-------|----------|----------|----------|----------|--------|-----------|
| F1 | $a_{10}$ | $A_1$ | $a_{12}$ | $a_{13}$ | $a_{14}$ | $a'_{10}$ | $A'_1$ |
| F2 | $a_{20}$ | $a_{21}$ | $A_2$ | $a_{23}$ | $a_{24}$ | $a'_{20}$ | $a'_{21}$ |
| F3 | $a_{30}$ | $a_{31}$ | $a_{32}$ | $A_3$ | $a_{34}$ | $a'_{30}$ | $a'_{31}$ |
| F4 | $a_{40}$ | $a_{41}$ | $a_{42}$ | $a_{43}$ | $A_4$ | $a'_{40}$ | $a'_{41}$ |

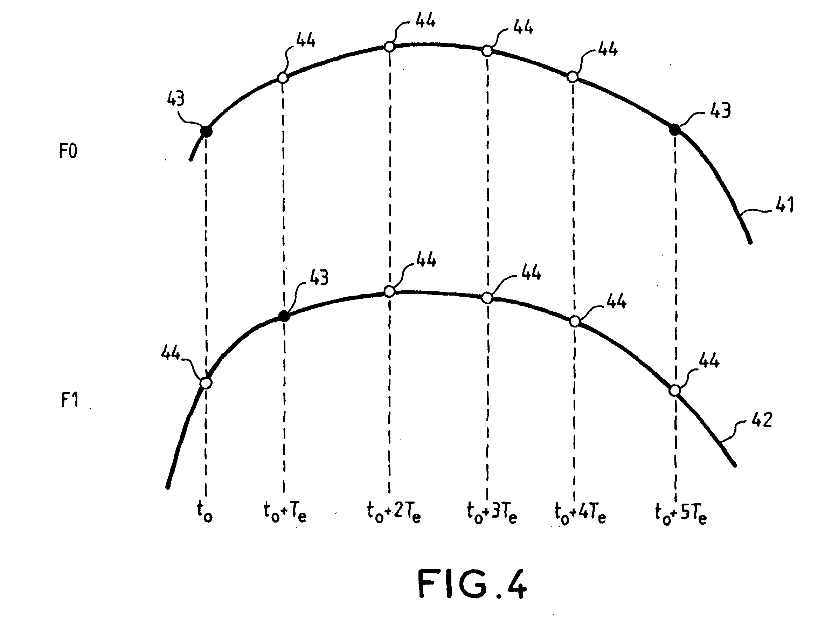

Chaque ligne de ce tableau, relative à une fréquence Fi représente les échantillons successifs dont l'échantillon réel $A_i$. Les valeurs fictives $a_{ij}$ sont mémorisées puis affectées aux instants d'échantillonnages de telle sorte que du point de vue du signal reconstitué par les circuits du récepteur, toutes les valeurs $A_i$, $a_{ki}$ d'une colonne du tableau précédent soient considérées comme étant échantillonnées au même instant. Les valeurs de la première colonne sont échantillonnées à un instant $t_0$, les colonnes suivantes sont échantillonnées respectivement aux instant $t_0 + T_e$, $t_0 + 2T_e$, $t_0 + 3T_e$, $t_0 + 4T_e$, $t_0 + 5T_e$, $t_0 + 6T_e$ etc... , $T_e$ étant la période d'échantillonnage. En d'autres termes, un récepteur selon l'invention comporte des moyens d'échantillonnages réalisant des échantillons réels $A_i$ des signaux dans chaque canal de réception et des moyens d'extrapolation qui produisent des échantillons fictifs $a_{ij}$ synchrones des échantillons réels, les signaux de réception étant constitués à partir des échantillons réels et des échantillons fictifs. Les valeurs fictives $a_{ij}$ sont par exemple choisies de façon à extrapoler les signaux réellement échantillonnés $A_i$, comme l'illustre la figure 4 relativement aux signaux à fréquences F0 et F1. Dans ce cas, les valeurs fictives $a_{ij}$ ne sont pas simplement prédéterminées et mémorisées, mais obtenues par calcul selon par exemple une méthode d'extrapolation connue.

La figure 4 présente à titre d'exemple deux signaux 41, 42 relatifs respectivement aux fréquences F0 et F1 extrapolés conformément aux valeurs fictives $a_{ij}$. Il s'agit ici, à titre d'exemple d'une interpolation sinusoïdale obtenue après blocages fictifs et après filtrage. Des points noirs 43 représentent les valeurs des signaux réellement échantillonnés alors que des points blancs 44 représentent les échantillons fictifs. En ce qui concerne le signal 41 à la fréquence F0, l'échantillonnage réalisé à un instant $t_0$ donne la valeur $A_0$ précédente. En ce qui concerne le signal 42 à la fréquence F1, l'échantillonnage réalisé à un instant $t_0 + T_e$ donne la valeur $A_1$ précédente. L'extrapolation des signaux par les échantillons fictifs $a_{ij}$ 44 est par exemple obtenue par un calculateur à partir de la connaissance des périodes des signaux ainsi que de leurs valeurs maximales ou non, estimées à partir de récurrences antérieures. En particulier, une interpolation linéaire est possible à partir de deux signaux immédiatement précédents.

Des figures 3 et 4, et quelles que soient les valeurs des échantillons fictifs $a_{ij}$, qu'elles soient en particulier arbitrairement choisies égales à zéro ou à une autre valeur constante ou non, il s'ensuit que dans un récepteur selon l'invention, des moyens d'interpolation délivrent, à partir des échantillons réels $A_i$ et des échantillons fictifs $a_{ij}$, des signaux aux fréquences F1, F2, F3, F4, F5 qui apparaissent comme étant émis et reçus simultanément, et échantillonnés de façon synchrone. En particulier, la fréquence Doppler des signaux reçus apparaît alors comme n'étant plus corrélée avec les résultats des calculs de transformations de Fourrier rapides donnant la rotation de phase $\Delta\varphi$, et de fait les mesures de distances ne sont plus perturbées.

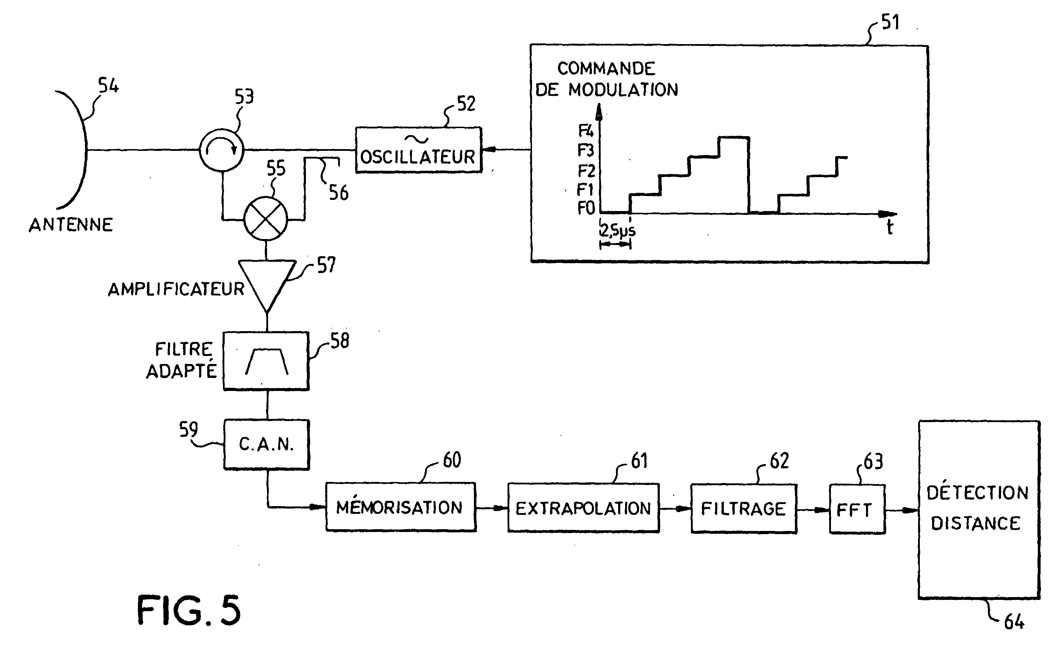

La figure 5 présente, par un synoptique, un radar à onde continue et à saut de fréquence, l'onde étant émise selon des trames de cinq fréquences conformément par exemple à la forme présentée par la figure 1, ce radar utilisant un récepteur numérique selon l'invention. Ce récepteur est par exemple du type homodyne.

Des moyens de commande de modulation 51 commandent un oscillateur local 52 de façon à ce que ce dernier délivre cinq fréquences par exemple selon les relations (1) à (5). Cet oscillateur 52 est relié à un circulateur 53 pour fournir via ce dernier et des moyens d'amplification non représentés l'onde d'émission à une antenne 54. Un signal reçu par cette antenne est fourni via le circulateur 53 à un mélangeur 55. Le récepteur selon l'invention comporte par exemple au moins ce mélangeur 55, un amplificateur 57, un filtre adapté 58, un convertisseur analogique-numérique 59, des moyens de mémorisation 60, et des moyens d'interpolation 61 et des moyens de filtrage 62. Ces derniers délivrent les signaux à des moyens 63 de calcul de transformations de Fourrier rapides FFT dont les résultats sont analysés par des moyens de calcul 64 pour estimer les distances selon par exemple la relation (6) précédente ou selon d'autres relations plus complexes permettant notamment de lever des ambiguïtés sur les distances estimées.

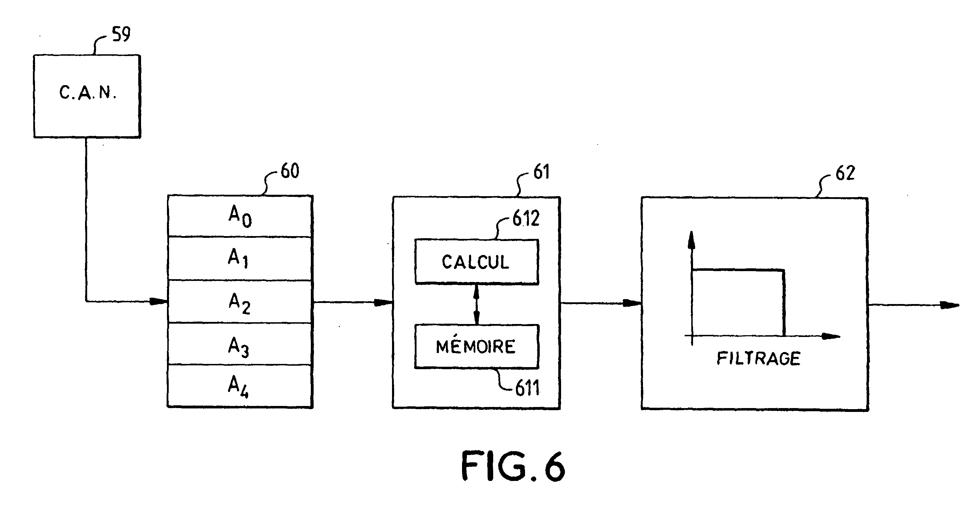

En ce qui concerne le récepteur numérique, le mélangeur 55 reçoit par ailleurs via un coupleur 56 le signal de sortie de l'oscillateur 52. Le signal de sortie du mélangeur 55 est par exemple amplifié par l'amplificateur 57 dont la sortie est reliée à l'entrée du filtre adapté 58. Ce filtre adapté sert notamment à limiter la bande passante aux signaux de sortie. En l'occurrence, les signaux étant échantillonnés à la fréquence d'échantillonnage $F_e$, la fréquence de coupure du filtre est par exemple inférieure ou égale à $F_e/2$. Le filtre adapté 58 est par exemple constitué d'un circuit RC, c'est-à-dire simplement d'une résistance et d'une capacité. La sortie de ce filtre est reliée à l'entrée du convertisseur analogique-numérique 59. Ce dernier échantillonne le signal de réception reçu, amplifié et filtré, puis le convertit numériquement. L'échantillonnage est par exemple réalisé à la fréquence de 400 kHz de façon à générer cinq signaux numériques à la fréquence de 80 kHz correspondant aux cinq fréquences d'émission du radar dans le cas où chaque créneau d'émission a une durée de 2,5 µs. Il y a alors un échantillonnage par créneau d'émission. Le convertisseur 59 est suivi de cinq voies de réception, une voie étant associée à une fréquence d'émission. Ces voies de réceptions sont contenues dans les moyens de mémorisation 60, d'extrapolation 61 et de filtrage 62 présentés plus en détail par la figure 6.

La figure 6 détaille par un synoptique, la mémorisation des échantillons réels $A_0$, $A_1$, $A_2$, $A_3$, $A_4$, la génération des échantillons fictifs ou extrapolation et le filtrage des signaux extrapolés. Le convertisseur analogique-numérique 59 est par exemple commandé aux instants d'échantillonnages $t_0 + T_e$, $t_0 + 2T_e$, $t_0 + 3T_e$, $t_0 + 4T_e$, $t_0 + 5T_e$, $t_0 + 6T_e$... pour convertir les signaux reçus aux différentes fréquences F0, F1, F2, F3, F4, F5. Le convertisseur comporte par exemple un bloqueur intégré, le blocage du signal avant conversion correspondant ainsi à l'instant d'échantillonnage. La sortie du convertisseur analogique-numérique 59 fournit les valeurs des échantillons réels $A_0$, $A_1$, $A_2$, $A_3$, $A_4$ qui sont stockés chacun dans un emplacement des moyens de mémorisation 60 qui leur est dédié. Ces moyens de mémorisation sont par exemple une zone réservée de mémoire vive RAM. La commande du convertisseur 59 ainsi que le stockage des échantillons dans la mémoire 60 est par exemple réalisée par un microprocesseur non représenté, qui peut être utilisé par ailleurs pour d'autres tâches. Les échantillons réels contenus dans les moyens de mémorisation 60 sont par la suite pris en compte par les moyens d'extrapolation 61. Une extrapolation est réalisée à chaque récurrence radar, c'est-à-dire pour chaque réception correspondant à une trame d'émissions aux cinq fréquences utilisées, dans le cas où le radar en utilise cinq. Les moyens d'extrapolation comportent une mémoire 611 pour stocker les valeurs d'extrapolation, relatives aux échantillons fictifs. En cas d'extrapolation linéaire par exemple, de la mémoire vive permet de stocker des échantillons antérieurs. Des moyens de calcul 612 constituent les signaux extrapolés tels que présentés à la figure 3. Les signaux extrapolés sont alors discrets. Les moyens de filtrage 62 qui suivent les moyens d'interpolation, et qui sont du type passe-bas, permettent alors de fournir un signal continu par exemple du type de celui présenté à la figure 4, la fréquence de coupure de ces moyens de filtrage étant inférieure ou égale à $F_e/2$ où $F_e = 1/T_e$ est la fréquence d'échantillonnage. Les moyens de filtrage 62 réalisent par exemple un filtrage numérique, dont les coefficients sont définis de façon connue de l'homme du métier pour obtenir notamment le filtre passe-bas précédent. De préférence le filtre est non récursif, ce qui permet notamment de ne l'adapter qu'aux signaux de sorties et non pas à la fréquence d'échantillonnage du codeur 59. En effet, un tel filtre, dont la fonction de transfert ne possède pas de dénominateur, n'utilise pas de valeurs intermédiaires fournies en entrée. Dans le cas par exemple où les échantillons fictifs $a_{ij}$ sont tous égaux à zéro, le filtre 62 permet d'extrapoler ces valeurs nulles en limitant la bande passante à la fréquence de sortie définie.

En plus de son aspect économique, un avantage de l'invention est qu'elle implique un « suréchantillonnage » des signaux reçus. En d'autres termes, dans le cas par exemple où le radar utilise cinq fréquences, les échantillons fournis au filtre 62 sont à la fréquence d'échantillonnage et non pas à 1/5 de cette fréquence comme dans le cas où ne sont fournis que les échantillons réels, ce qui améliore le filtrage puisque le filtre peut ainsi fonctionner à un ordre supérieur. L'invention est par ailleurs simple à mettre en oeuvre.

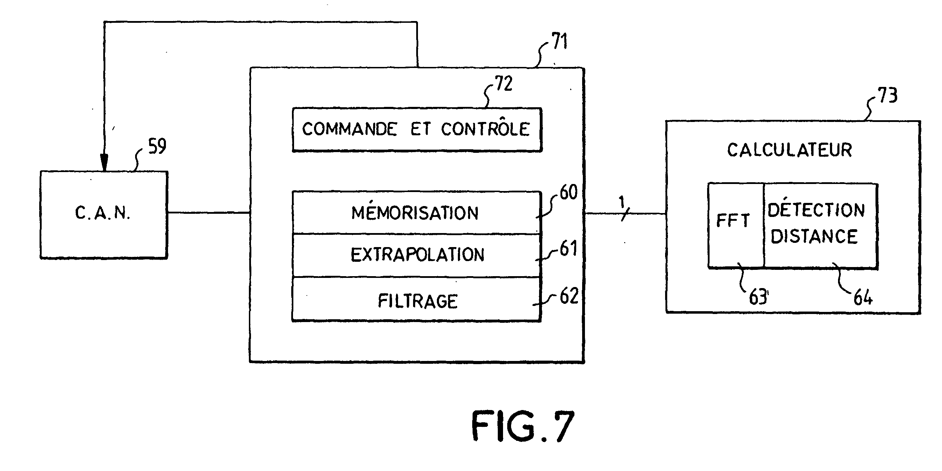

En particulier, comme l'illustre la figure 7, les moyens de mémorisation 60, les moyens d'extrapolation 61 et les moyens de filtrages 62 peuvent être réalisés dans un même circuit 71. Ce circuit 71 peut par exemple être un composant spécifique connu notamment de l'homme du métier sous le terme ASIC. Ce circuit peut encore être réalisé à base de microprocesseurs, de composants programmables, de séquenceurs ou de logique câblée. L'entrée du circuit 71 étant reliée à la sortie du convertisseur analogique-numérique 59, il peut en outre comporter les circuits 72 de commande et de contrôle de ce dernier. Ces circuits 72 peuvent en particulier comporter une horloge destinée à générer la fréquence d'échantillonnage des circuits de réception. Le filtre de sortie 62 étant numérique, il peut fournir ses signaux de sortie par exemple sous la forme d'une liaison série à un calculateur 73 qui englobe les moyens 63 de calcul FFT et les moyens de détection de distance 64. Ces derniers fournissant alors des valeurs de distances à des moyens de traitement non représentés, en vue par exemple, en cas d'application ACC, de fournir un signal d'alarme à un conducteur ou d'actionner les organes de commande de la vitesse d'une automobile. Le récepteur selon l'invention étant en fait programmable, notamment au niveau des moyens d'interpolation 61 et de filtrage 62, il n'est notamment pas limité par le nombre de fréquences d'émissions utilisées dans un radar à saut de fréquence.

L'invention permet notamment, par l'utilisation d'un filtrage non récursif 62, de rendre indépendants l'un de l'autre le rythme de la trame de sortie du récepteur et la fréquence d'échantillonnage. En particulier, cette désynchronisation s'effectue lors du filtrage 62. Il est ainsi possible par exemple de ne prendre en compte que les valeurs filtrées toutes les 20 µs au lieu de toutes les 2,5 µS qui est la période d'échantillonnage. En d'autres termes, l'instant de calcul du résultat du filtrage peut être choisi librement, par exemple toutes les 20 µs pour une bande Doppler de 25 kHz. L'invention permet aussi de réduire la dynamique des codeurs dans la mesure où le signal rapport à bruit est plus faible que dans une solution classique, grâce aux échantillons fictifs supplémentaires. Ainsi, un codeur à 12 bits peut être utilisé à la place d'un codeur de 16 bits. Un premier bilan économique de l'invention apparaît donc, puisque, dans le cas par exemple d'utilisation de cinq fréquences, un codeur 12 bits à 400 kHz peut remplacer cinq codeurs 16 bits à 50 kHz. Un tel codeur associé à l'ensemble électronique de la voie de réception est moins cher que les cinq autres associés à l'ensemble de l'électronique des cinq voies de réception, d'autant que le câblage est très nettement réduit. L'invention facilite par ailleurs le calibrage ou l'auto-calibrage du récepteur, du fait notamment qu'il n'y ait qu'une voie de codage. Enfin, les circuits numériques évitent les dérives dans le temps.

**Revendications**

1.    Récepteur pour radar à onde continue et à saut de fréquences émettant selon plusieurs fréquences d'émissions ($F_0$, $F_1$, $F_2$, $F_3$, $F_4$), et comprenant plusieurs voies de réception correspondantes, **caractérisé en ce qu'**il comporte au moins des moyens d'échantillonnage (59) réalisant des échantillons réels (22, $A_0$, $A_1$, $A_2$, $A_3$, $A_4$) des signaux dans chaque canal de réception et des moyens d'extrapolation (61), les moyens d'extrapolation produisant des échantillons fictifs (31, $a_{ij}$) synchrones des échantillons réels, les signaux de réception étant constitués à partir des échantillons réels et des échantillons fictifs.

2.    Récepteur selon la revendication 1, **caractérisé en ce que** les échantillons fictifs (31, $a_{ij}$) ont une valeur nulle.

3.    Récepteur selon la revendication 1, **caractérisé en ce que** les échantillons fictifs (31, $a_{ij}$) sont égaux à la dernière valeur réelle échantillonnée.

4.    Récepteur selon la revendication 1, **caractérisé en ce que** les échantillons fictifs (31, $a_{ij}$) sont obtenus par une extrapolation linéaire des échantillons réels.

5.    Récepteur selon l'une quelconque des revendications précédentes, **caractérisé en ce qu'**il comporte des moyens de filtrage (62) en sortie des moyens d'extrapolation (61).

6.    Récepteur selon la revendication 5, **caractérisé en ce que** les moyens de filtrage (62) sont numériques.

7.    Récepteur selon la revendication 6, **caractérisé en ce que** le filtre est non récursif.

8.    Récepteur selon l'une quelconque des revendications précédentes, **caractérisé en ce qu'**une extrapolation des échantillons réels par les échantillons fictifs est réalisée à chaque récurrence radar.

9.    Récepteur selon l'une quelconque des revendications précédentes, **caractérisé en ce que** les moyens d'échantillonnage sont contenus dans un convertisseur analogique-numérique (59).

10.  Récepteur selon l'une quelconque des revendications précédentes, **caractérisé en ce qu'**il comporte, en amont des moyens d'échantillonnage (59) un filtre adapté (58) dont la fréquence de coupure est inférieure ou égale à la fréquence d'échantillonnage divisée par deux ($F_e/2$).

**11.** Récepteur selon l'une quelconque des revendications précédentes, **caractérisé en ce que** le radar émet et reçoit selon cinq fréquences (F0, F1, F2, F3, F4).

**12.** Récepteur selon la revendication 11, **caractérisé en ce que** les cinq fréquences F0, F1, F2, F3, F4 vérifient les relations suivantes:

$$F0 = F + k_0 \nu$$

$$F1 = F + k_1 \nu$$

$$F2 = F + k_2 \nu$$

$$F3 = F + k_3 \nu$$

$$F4 = F + k_4 \nu$$

où F est une fréquence quelconque dans la bande de fréquence d'utilisation du radar, les coefficients $k_i$ sont cinq entiers différents, et $\nu$ représente une fréquence donnée.

**13.** Récepteur selon l'une quelconque des revendications 11 ou 12, **caractérisé en ce que** la bande de fréquence du radar est comprise entre 76 à 77 Ghz.

**14.** Récepteur selon l'une quelconque des revendications 11 à 13, **caractérisé en ce qu'**il équipe un véhicule automobile.

**15.** Récepteur selon l'une quelconque des revendications précédentes, **caractérisé en ce qu'**il est homodyne.

**Patentansprüche**

**1.** Empfänger für ein Dauerstrichradar mit Frequenzsprung, das mehrere Sendefreqenzen (F0, F1, F2, F3, F4), aussendet und mit mehreren entsprechenden Empfangskanälen, **dadurch gekennzeichnet, dass** er zumindest Abtastmittel (59), die relle Abtastungen (22, $A_0$, $A_1$, $A_2$, $A_3$, $A_4$) der Signale in jedem Empfangskanal durchführen, und Extrapolationsmittel (61) umfasst, die fiktive Abtastwerte (31, $a_{ij}$) synchron zu den reellen Abtastungen erzeugen, wobei die Empfangssignale aus den reellen Abtastwerten und den fiktiven Abtastwerten gebildet werden.

**2.** Empfänger nach Anspruch 1, **dadurch gekennzeichnet, dass** die fiktiven Abtastwerte (31, $a_{ij}$) einen Wert Null haben.

**3.** Empfänger nach Anspruch 1, **dadurch gekennzeichnet, dass** die fiktiven Abtastwerte (31, $a_{ij}$) gleich dem letzten reellen Abtastwert sind.

**4.** Empfänger nach Anspruch 1, **dadurch gekennzeichnet, dass** die fiktiven Abtastwerte (31, $a_{ij}$) durch eine lineare Extrapolation der rellen Abtastwerte erhalten werden.

**5.** Empfänger nach einem der vorhergehenden Ansprüche, **dadurch gekennzeichnet, dass** er Filtermittel (62) am Ausgang der Extrapolationsmittel (61) umfasst.

**6.** Empfänger nach Anspruch 5, **dadurch gekennzeichnet, dass** die Filtermittel (62) digitale Filtermittel sind.

**7.** Empfänger nach Anspruch 6, **dadurch gekennzeichnet, dass** das Filter nichtrekursiv ist.

**8.** Empfänger nach einem der vorhergehenden Ansprüche, **dadurch gekennzeichnet, dass** eine Extrapolation der rollen Abtastwerte durch fiktive Abtastwerte bei jeder Radarabfragefolge durchgeführt wird.

**9.** Empfänger nach einem der vorhergehenden Ansprüche, **dadurch gekennzeichnet, dass** die Abtastmittel in einem Analog/Digitalwandler (59) enthalten sind.

**10.** Empfänger nach einem der vorhergehenden Ansprüche, **dadurch gekennzeichnet, dass** er stromaufwärts von den Abtastmitteln (59) ein adaptiertes Filter (58) umfasst, dessen Abschneidfrequenz kleiner oder gleich der durch Zwei dividierten Abtastfrequenz ist ($F_e/2$).

**11.** Empfänger nach einem der vorhergehenden Ansprüche, **dadurch gekennzeichnet, dass** das Radar auf fünf Frequenzen (F0, F1, F2, F3, F4) sendet und empfängt.

**12.** Empfänger nach Anspruch 11, **dadurch gekennzeichnet, dass** die fünf Frequenzen F0, F1, F2, F3, F4 die folgenden Beziehungen erfüllen:

$$F0 = F + k_0 \nu$$

$$F1 = F + k_1 \nu$$

$$F2 = F + k_2 \nu$$

$$F3 = F + k_3 \nu$$

$$F4 = F + k_4 \nu$$

wobei F eine beliebige Frequenz in dem Nutzfrequenzband des Radars ist, die Koeffizienten $k_i$ fünf unterschiedliche ganze Zahlen sind und $\nu$ eine gegebene Frequenz darstellt.

**13.** Empfänger nach einem der Ansprüche 11 oder 12, **dadurch gekennzeichnet, dass** das Frequenzband des Radars zwischen 76 und 77 GHz liegt.

**14.** Empfänger nach einem der Ansprüche 11 bis 13, **dadurch gekennzeichnet, dass** er zur Ausrüstung eines Kraftfahrzeugs gehört.

**15.** Empfänger nach einem der vorhergehenden Ansprüche, **dadurch gekennzeichnet, dass** er ein Homodynempfänger ist.

**Claims**

**1.** Receiver for a frequency-hopping continuous-wave radar transmitting in several transmission frequencies (F0, F1, F2, F3, F4) and comprising several corresponding reception pathways, **characterized in that** said receiver comprises at least sampling means (59) taking real samples (22, $A_0$, $A_1$, $A_2$, $A_3$, $A_4$) of the signals in each reception channel and extrapolation means (61), the extrapolation means producing fictitious samples (31, $a_{ij}$) synchronous with the real samples, the reception signals being formed out of the real samples and fictitious samples.

**2.** Receiver according to Claim 1, **characterized in that** the fictitious samples (31, aij) have a zero value.

**3.** Receiver according to Claim 1, **characterized in that** the fictitious samples are equal to the last sampled real value.

**4.** Receiver according to Claim 1, **characterized in that** the fictitious samples are obtained by a linear extrapolation of the real samples.

**5.** Receiver according to any one of the preceding claims, **characterized in that** it comprises filtering means (62) at output of the extrapolation means (61).

**6.** Receiver according to Claim 5, **characterized in that** the filtering means (62) are digital.

**7.** Receiver according to Claim 6, **characterized in that** the filter is non-recursive.

**8.** Receiver according to any one of the preceding claims, **characterized in that** an extrapolation of the real samples by the fictitious samples is done at each radar recurrence.

**9.** Receiver according to any one of the preceding claims, **characterized in that** the sampling means are contained in an analogue-digital converter (59).

**10.** Receiver according to any one of the preceding claims, **characterized in that** it comprises, upline from the sampling means (59), a matched filter (58) whose cut-off frequency is smaller than or equal to the sampling frequency divided by two ($F_e/2$).

**11.** Receiver according to any one of the preceding claims, **characterized in that** the radar sends and receives in five frequencies (F0, F1, F2, F3, F4).

**12.** Receiver according to Claim 11, **characterized in that** the five frequencies F0, F1, F2, F3, F4 verify the following relationships:

$$F0 = F + k_0 v$$

$$F1 = F + k_1 v$$

$$F2 = F + k_2 v$$

$$F3 = F + k_3 v$$

$$F4 = F + k_4 v$$

where F is any frequency in the frequency band of use of the radar, the coefficients $k_i$ are five different integers, and v represents a given frequency.

**13.** Receiver according to either of Claims 11 or 12, **characterized in that** the frequency band of the radar ranges from 76 to 77 GHz.

**14.** Receiver according to any one of Claims 11 to 13, **characterized in that** it equips an automobile vehicle.

**15.** Receiver according to any one of the preceding claims, **characterized in that** it is homodyne.

FIG.1

FIG.2

EP 0 940 689 B1

FIG.3

EP 0 940 689 B1

FIG.4

EP 0 940 689 B1

FIG.5

EP 0 940 689 B1

59

C.A.N.

60

| $A_0$ |
|---|
| $A_1$ |
| $A_2$ |
| $A_3$ |
| $A_4$ |

61

612

CALCUL

MÉMOIRE

611

62

FILTRAGE

# FIG.6

FIG.7